# EUROPEAN PATENT SPECIFICATION

(11) **EP 3 638 701 B1**
(45) Date of publication and mention of the grant of the patent: **07.10.2020**
(21) Application number: 18745982.1
(22) Date of filing: 02.08.2018
(51) Int. Cl.: C08F 2/34, C08F 10/00, C08F 2/01

(54) **POLYMERIZATION PROCESS INCLUDING DISCHARGING POLYOLEFIN PARTICLES FROM A GAS-PHASE POLYMERIZATION REACTOR**
POLYMERISATIONSVERFAHREN MIT ENTLADEN VON POLYOLEFINPARTIKELN AUS EINEM GASPHASENPOLYMERISATIONSREAKTOR
PROCESSUS DE POLYMÉRISATION COMPRENANT DES PARTICULES DE POLYOLÉFINE DE DÉCHARGE PROVENANT D'UN RÉACTEUR DE POLYMÉRISATION EN PHASE GAZEUSE

(30) Priority: 04.08.2017 EP 17184839
(43) Date of publication of application: 22.04.2020
(73) Proprietor: Basell Polyolefine GmbH, 50389 Wesseling (DE)
(72) Inventor: MEI, Gabriele, Channelview TX 77530 (US); MEI, Giulia, 44122 Ferrara (IT); PENZO, Giuseppe, 44122 Ferrara (IT)
(74) Representative: LyondellBasell
(86) International application number: PCT/EP2018/071031
(87) International publication number: WO 2019/025560

(56) References cited:
- WO-A1-2014/090860
- WO-A2-2008/015228

## Description

### FIELD OF THE INVENTION

The present disclosure provides processes for preparing an olefin polymer in a gas-phase polymerization reactor. The present disclosure further provides processes for preparing an olefin polymer which include a degassing step of the polyolefin particles at a pressure from 0.1 to 0.4 MPa.

### BACKGROUND OF THE INVENTION

Gas-phase polymerization processes are economical processes for the polymerization of olefins such as homopolymerizing ethylene or propylene or copolymerizing ethylene or propylene with other olefins. Suitable reactors for carrying out such gas-phase polymerizations are for example fluidized-bed reactors, stirred gas-phase reactors or multizone circulating reactors with two distinct interconnected gas-phase polymerization zones. These processes are usually carried out in a gas phase comprising monomers and comonomers and often additionally also other gaseous components such as polymerization diluents, for example nitrogen or alkanes, or hydrogen as molecular weight modifier or low-molecular weight reaction products. The obtained products are generally solid polyolefin particles which are formed by polymerization catalyst systems usually comprising particulate catalyst solids.

When the produced material is continuously or discontinuously removed from the gas-phase polymerization reactors, the discharged product is not only pure polyolefin but contains also portions of the gaseous phase as intergranular gas or as dissolved hydrocarbons. For ecological, safety and quality reasons, these entrained parts of the gas-phase have to be removed from the polyolefin particles because such components constitute an impact on the environment, gaseous hydrocarbons may result in the formation of explosive mixtures in downstream equipment and remaining non-polymerized components in the final olefin polymers may cause problems of quality such as odor formation. Furthermore, it is desirable to recycle unreacted monomer and comonomer to the polymerization process.

A common practice for removing the entrained parts of the gas-phase from the polyolefin particles is contacting the particles with a stream of an inert gas, usually in countercurrent flow. Such a step is frequently denoted as "degassing" or "purging". Often such a degassing or purging step is combined with a step of deactivating the polymerization catalyst and/or cocatalysts, e.g. by reacting the catalyst and/or cocatalysts with water. Because the residual hydrocarbons in the polymer are in equilibrium with the surrounding gas phase, the achievable concentration of hydrocarbon residues in the polyolefin particles is the lower the lower the partial pressure of the component to be degassed is in the gas phase. Accordingly, commercial degassing is usually carried out at ambient pressure or not much higher pressures.

WO 2006/082007 A1 discloses an ethylene polymerization process which is carried out in a gas-phase reactor in the presence of a reaction gas comprising propane and the degassing of the polyolefin particles discharged from the polymerization reactor occurs by propane which has been separated from the reaction gas in a two-stage separation process.

WO 2014/090860 A1 describes an olefin polymerization process in the presence of a C₃-C₅ alkane as polymerization diluent in a gas-phase polymerization reactor, where the discharged polyolefin particles are treated in a three-step process by first contacting the polyolefin particles with a gaseous stream comprising at least 85 mol-% of C₃-C₅ alkane, thereafter contacting the polyolefin particles with a stream comprising nitrogen and steam, and then contacting the polyolefin particles with a stream of nitrogen. Before being contacting with the gaseous stream comprising C₃-C₅ alkane, the discharged polyolefin particles can be separated from the major part of the concomitantly discharged reaction gas in a separation vessel.

When carrying out the separation of the discharged polyolefin particles from the concomitantly discharged reaction gas at a pressure which is advantageous for degassing the polyolefin particles, to recover the separated gas, a high gas amount has to be re-compressed to the polymerization pressure.

There is accordingly a need to provide a process which allows reducing drastically the flowrate of the recovery compressor and thus utilizing a much smaller compressor. Furthermore, it should be possible to operate the distillation process, which generates a C₃-C₅ alkane stream for degassing the discharged polyolefin particles, with water as cooling medium.

### SUMMARY OF THE INVENTION

The present disclosure provides a process for preparing an olefin polymer, comprising the steps of
a) forming a particulate olefin polymer in a gas-phase polymerization reactor by homopolymerizing an olefin or copolymerizing an olefin and one or more other olefins at temperatures from 20 to 200°C and pressures of from 0.5 to 10 MPa in the presence of a polymerization catalyst and a reaction gas comprising a C₃-C₅ alkane as polymerization diluent;
b) discharging the formed polyolefin particles from the polymerization reactor into a separation vessel being operated at a pressure from 1 to 2.2 MPa;
c) withdrawing a gaseous stream from the separation vessel and transferring the gaseous stream into a reaction gas work-up unit, which is operated at a pressure from 0.001 to 0.2 MPa below the pressure of the separation vessel and which produces at least one liquid stream which is recycled to the polymerization reactor;
d) transferring the polyolefin particles from the separation vessel into a first degassing vessel operated at a pressure from 0.1 to 0.4 MPa; and
e) contacting therein the polyolefin particles with a gaseous stream comprising from 85 to 100 vol.-% of a C₃-C₅ alkane, wherein the gaseous stream is continuously received from the reaction gas work-up unit;
f) withdrawing the gaseous stream, which had been in contact with the polyolefin particles in the first degassing vessel, from the first degassing vessel, compressing the gaseous stream to the pressure of the gaseous stream withdrawn from the separation vessel, and transferring the compressed gaseous stream into the reaction gas work-up unit, in which the gaseous stream withdrawn from the separation vessel is worked up.

In some embodiments, the process further comprises the steps of
g) transferring the polyolefin particles from the first degassing vessel into a second degassing vessel; and
h) contacting therein the polyolefin particles at a pressure from 0.1 to 0.35 MPa with a stream comprising nitrogen and steam at conditions under which no condensation of water occurs.

In some embodiments, the process further comprises the steps of
i) transferring the polyolefin particles from the second degassing vessel into a third degassing vessel; and
j) contacting therein the polyolefin particles at a pressure from 0.1 to 0.2 MPa with a stream of nitrogen.

In some embodiments, in step f), the compressed gaseous stream withdrawn from the first degassing vessel is combined with the gaseous stream withdrawn from the separation vessel and the combined stream is transferred into the reaction gas work-up unit.

In some embodiments, the reaction gas work-up unit operates by distillation.

In some embodiments, the reaction gas work-up unit comprises two separation stages.

In some embodiments, the contacting of the polyolefin particles in step e), and, if carried out, in step h) or in steps h) and j) is conducted countercurrently.

In some embodiments, in step h), the polyolefin particles are contacted with a gaseous stream comprising from 2 mol-% to 20 mol-% of water vapor.

In some embodiments, in step c), the gaseous stream withdrawn from the separation vessel is freed of entrained fine particles before being transferred into the reaction gas work-up unit.

In some embodiments, the gas-phase polymerization reactor is a stirred gas-phase reactor, a fluidized-bed reactor, or a multizone circulation reactor.

In some embodiments, in step b), the formed polyolefin particles are discharged from a position of the gas-phase polymerization reactor, at which the polyolefin particles are present in a densified bed of polyolefin particles.

In some embodiments, the content of C₃-C₅ alkane in the gas surrounding the polyolefin particles in the densified bed of polyolefin particles is higher than the average content of C₃-C₅ alkane in the reaction gas within the gas-phase polymerization reactor.

In some embodiments, the polymerization is a homopolymerization of ethylene or a copolymerization of ethylene and one or more other olefins selected from the group consisting of 1-butene, 1-hexene and 1-octene.

In some embodiments, the C₃-C₅ alkane employed as polymerization diluent is identical to the C₃-C₅ alkane comprised in the gaseous stream employed for being contacted with the polyolefin particles in steps e).

In some embodiments, the C₃-C₅ alkane is propane, n-butane, isobutane, n-pentane or isopentane, or a mixture thereof.

### BRIEF DESCRIPTION OF THE DRAWINGS

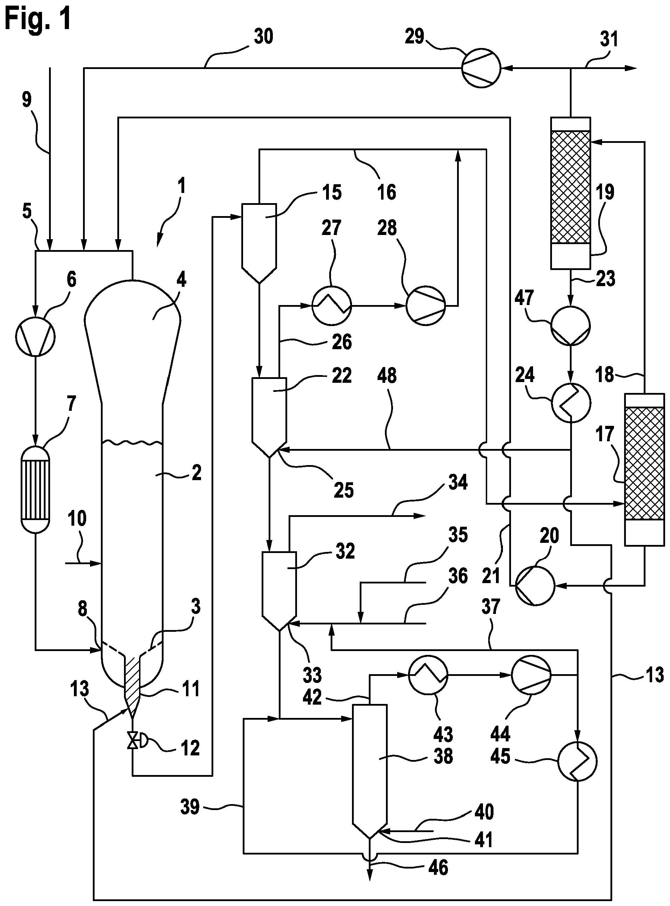

Figure 1 shows schematically a set-up for preparing an olefin polymer according to the process of the present disclosure.

### DETAILED DESCRIPTION OF THE INVENTION

The present disclosure provides a process for preparing an olefin polymer. Olefins, which may be utilized for preparing the olefin polymer, are especially 1-olefins, i.e. hydrocarbons having terminal double bonds, without being restricted thereto. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The prepared olefin polymer may be any kind of polyolefin. Preferably the olefin polymer is a homopolyme or copolymer of ethylene or propylene and is especially preferably a homopolymer or copolymer of ethylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

In step a) of the process of the present disclosure, a particulate olefin polymer is formed in a gas-phase polymerization reactor by homopolymerizing an olefin or copolymerizing an olefin and one or more other olefins. The polymerization is carried out at temperatures from 20 to 200°C, preferably from 30 to 160°C, and in particular from 65 to 125°C and at pressures from 0.5 to 10 MPa, preferably from 1.0 to 8 MPa and in particular from 1.5 to 4 MPa, wherein these pressures, as all pressures given in the present disclosure, have to be understood as being absolute pressures, i.e. pressure having the dimension MPa (abs).

Suitable reactors are, for example, stirred gas-phase reactors, multizone gas-phase reactors, or gas-phase fluidized-bed reactors. Reactors of these types are generally known to those skilled in the art. Stirred gas-phase reactors can, for example, be horizontally or vertically stirred.

Preferred reactors are fluidized-bed reactors, i.e. reactors comprising a bed of polymerizing polyolefin particles which are kept in fluidized state by introducing a gas from below. This gas is then usually taken off at the upper end of the reactor, cooled to remove the heat of polymerization and recirculated back into the reactor at its lower end.

Preferred reactors are further multizone circulating reactors which are, for example, described in WO 97/04015 and WO 00/02929 and have two interconnected polymerization zones, a riser, in which the growing polyolefin particles flow upward under fast fluidization or transport conditions and a downcomer, in which the growing polyolefin particles flow in a densified form under the action of gravity. The polyolefin particles leaving the riser enter the downcomer and the polyolefin particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polyolefin particles can be partially or totally prevented from entering the downcomer. This can, for example, be achieved by feeding a barrier fluid in form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polyolefin particles is generated, particularly at the top thereof, acting as a barrier to the gas mixture entrained among the particles coming from the riser. In this manner, it is possible to obtain two different gas composition zones in one multizone circulating reactor. Furthermore, it is also possible to introduce make-up monomers, comonomers, molecular weight regulator such as hydrogen and/or inert fluids at any point of the downcomer, preferably below the barrier feeding point. Thus, it is also easily possible to create varying monomer, comonomer and hydrogen concentrations along the downcomer resulting in a further differentiation of the polymerization conditions.

The process of the present disclosure is carried out in the presence of a polymerization catalyst. Suitable polymerization catalysts are all customary olefin polymerization catalysts. That means the polymerization can be carried out using Phillips catalysts based on chromium oxide, using Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

Preferred catalysts are also Phillips-type chromium catalyst, which are preferably prepared by applying a chromium compound to an inorganic support and subsequently activating the obtained catalyst precursor at temperatures in the range from 350 to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during activation. As supports for Phillips-type catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250°C to 500°C, preferably at 300°C to 400°C, in an activator.

The obtained polyolefin particles have a more or less regular morphology and size, depending on the catalyst morphology and size, and on polymerization conditions. Depending on the catalyst used, the polyolefin particles usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 500 to about 3000 µm.

The process of the present disclosure is carried out with a reaction gas comprising a C₃-C₅ alkane as polymerization diluent, i.e. a reaction gas comprising propane, butane or pentane or a mixture thereof or of their isomers. Preferred C₃-C₅ alkanes are propane, n-butane, isobutane, n-pentane or isopentane, or a mixture thereof. Most preferably, the polymerization is carried out in the presence of propane, especially in the case of homopolymerization or copolymerization of ethylene. The reaction gas mixture may further comprise nitrogen as additional polymerization diluent. The reaction gas mixture within the reactor additionally comprises the olefins to be polymerized, i.e. a main monomer and one or more optional comonomers. In a preferred embodiment of the present disclosure, the reaction gas mixture has a content of inert components from 30 to 99 vol.%, more preferably from 50 to 95 vol.%, and especially from 60 to 90 vol.%. The reaction gas mixture may further comprise additional components such as antistatic agents or molecular weight regulators like hydrogen. The components of the reaction gas mixture may be fed into the gas-phase polymerization reactor in gaseous form or as liquid which vaporizes within the reactor. The polymerization can also be carried out in a condensing or super-condensing mode, in which part of the circulating gas is cooled to below the dew point and returned to the reactor separately as a liquid and a gas phase or together as a two-phase mixture in order to make additional use of the enthalpy of vaporization for cooling the reaction gas.

In step b) of the process of the present disclosure, the polyolefin particles formed in step a) are discharged from the polymerization reactor into a separation vessel. The discharge can be carried out pneumatically, by means of gravity or with the aid of mechanical discharge systems. Preferably, the discharge occurs with pneumatic discharge and/or by gravity, wherein a pneumatic discharge is most preferably achieved by means of the pressure gradient prevailing between the polymerization reactor and the first downstream vessel. The discharge can be carried out discontinuously or continually, wherein the polyolefin particles are preferably discharged continuously from the gas-phase polymerization reactor.

The discharge of polyolefin particles can occur at any suitable position of the gas-phase polymerization reactor. Preferably, the polyolefin particles are discharged from a position of the gas-phase polymerization reactor, at which the polyolefin particles are present in a densified bed of polyolefin particles.

When carrying out the polymerization of the present disclosure in a fluidized-bed reactor, the polyolefin particles can be discharged directly from the fluidized-bed reactor, such as, for example, disclosed in WO 2012/175469 A1. In a preferred embodiment of the present disclosure, the fluidized-bed reactor is equipped with a continuous pneumatic recycle of the polyolefin particles by means of a circulation loop which connects the fluidization grid with the upper region of the fluidized-bed reactor, as disclosed in WO 2007/071527 A1. In this embodiment, the circulation loop comprises below the fluidized-bed reactor a vertical pipe, in which the polyolefin particles are present in a densified bed of polyolefin particles. In another preferred embodiment of the present disclosure, the fluidized-bed reactor comprises a vertical settling pipe, which is integrated with its upper opening into the distribution grid and which contains a densified bed of polyolefin particles, as disclosed in WO 2013/083548 A2. In this embodiment, the polyolefin particles are discharged from the lower end of the settling pipe.

When carrying out the polymerization of the present disclosure in a multizone circulating reactor, the polyolefin particles are preferably discharged directly from the downcomer, in which the polyolefin particles are present in a densified bed of polyolefin particles.

Discharging the polyolefin particles from a densified bed of polyolefin particles brings about the advantage that less gas is discharged than by discharging from a fluidized bed or from a particle bed under transport conditions, because the solids concentration in a densified bed is higher than the solids concentration in a fluidized bed or in a particle bed under transport conditions.

When discharging the polyolefin particles from a densified bed of polyolefin particles, it is especially preferred that the proportion of C₃-C₅ alkane in the gas surrounding the polyolefin particles in the densified bed is higher than in the average proportion of C₃-C₅ alkane in the gas within the gas-phase polymerization reactor. Having a high content of C₃-C₅ alkane in the gas, which is discharged concomitantly with the polyolefin particles, is advantageous because the C₃-C₅ alkane can be recycled to the gas-phase polymerization reactor in liquified form and this reduces the amount of gas, which needs to be compressed by a gas compressor for being recycled.

When carrying out the process of the present disclosure in a gas-phase reactor which is equipped with a vertical pipe, in which polyolefin particles are present in form of a densified bed of polyolefin particles and the discharge of polyolefin particles takes place from this pipe, it is preferred to introduce a fluid into the pipe in an amount that an upward stream of the fluid is induced in the bed of polyolefin particles above the fluid introduction point. Preferably, the fluid is the C₃-C₅ alkane utilized as polymerization diluent.

When carrying out the process of the present disclosure in a multizone circulating reactor, it is preferred to discharge the polyolefin particles from the downcomer and to carry out the polymerization in a way that the content of C₃-C₅ alkane in the reaction gas within the downcomer is higher than the content of C₃-C₅ alkane in the reaction gas within the riser.

The separation vessel, into which the polyolefin particles are discharged from the polymerization reactor, is operated at a pressure from 1 to 2.2 MPa, preferably at a pressure from 1.5 to 2.0 MPa. Within the separation vessel, the polyolefin particles discharged from the polymerization reactor are separated from a major part of the concomitantly discharged gas mixture.

In step c) of the process of the present disclosure, a gaseous stream is withdrawn from the separation vessel and transferred into a reaction gas work-up unit which is operated at a pressure which is from 0.001 to 0.2 MPa, preferably from 0.005 to 0.15 MPa and more preferably from 0.01 to 0.05 MPa below the pressure of the separation vessel. Preferably, the transfer into the reaction gas work-up unit occurs by the pressure difference between the pressure within the separation vessel and the pressure of the reaction gas work-up unit.

In a preferred embodiment of the present disclosure, the gaseous stream withdrawn from the separation vessel is freed of entrained fine particles before being transferred into the reaction gas work-up unit. The removal of the fine particles may occur by any suitable method, for example by employing a filter.

The reaction gas work-up unit is designated to produce at least one liquid stream which is recycled to the polymerization reactor. In a preferred embodiment, the reaction gas work-up unit produces one or more liquid streams and one or more gaseous streams by working up the reaction gas. According to the process of the present disclosure, one or more of the liquid streams which are recycled to the polymerization reactor may be evaporated before being recycled to the polymerization reactor. The reaction gas work-up unit may employ any suitable method for separating the C₃-C₅ alkanes from higher molecular weight or lower molecular weight components. Examples of separation techniques which may be employed are separation by distillation or separation by condensation. Preference is given to separation by distillation.

Preferably, the reaction gas work-up unit comprises two separation stage, one separation stage primarily for separating the C₃-C₅ alkanes from higher molecular weight gas components, and one separation stage primarily for separating the C₃-C₅ alkanes from lower molecular weight gas components. Examples for higher molecular weight gas components are higher molecular weight alkanes like hexane or octane or higher molecular weight olefins like 1-hexene or 1-octene, or, for example in an embodiment in which the C₃-C₅ alkane is propane, higher molecular weight alkanes such as butane, hexane or octane, or higher molecular weight olefins such as 1-butene, 1-hexene or 1-octene. Examples for lower molecular weight gas components are, ethane, ethylene, hydrogen or nitrogen. The gas stream may first pass the separation stage for separating the C₃-C₅ alkanes from higher molecular weight gas components or the gas stream may first pass the separation stage for separating the C₃-C₅ alkanes from lower molecular weight gas components. Preferably, the gas stream first passes the separation stage for separating the C₃-C₅ alkanes from higher molecular weight gas components.

In a preferred embodiment of the present disclosure, the first separation stage is a distillation column for separating the C₃-C₅ alkanes from higher molecular weight gas components. In this embodiment, the gaseous stream coming from the separation vessel is fed as side stream to a first distillation column. The liquid bottom stream of the first distillation column which consists of high-boiling components of the gaseous stream fed to the reaction gas work-up unit, can then be recycled to the gas-phase polymerization reactor by means of a pump. The gaseous top stream of the first distillation column is fed as side stream to a second distillation column. The gaseous top stream of the second distillation column is brought by a compressor to the pressure of the gas-phase polymerization reactor and recycled to the reactor. The liquid bottom stream of the second distillation column, which consists mainly of C₃-C₅ alkanes, is utilized for the degassing of the polyolefin particles in the first degassing vessel. For this purpose, the liquid bottom stream of the second distillation column can be transferred by a pressure gradient to a heat exchanger, evaporated and then fed as degassing medium to the first degassing vessel. In a preferred embodiment, the liquid bottom stream of the second distillation column is brought to a pressure higher than the pressure within the polymerization reactor by means of a pump, and, after being evaporated in the heat exchanger, is further fed to a part of the gas-phase polymerization reactor close to the position where the polyolefin particles are discharged to reduce the concentration of low-molecular weight components in the gas concomitantly discharged with the polyolefin particles from the polymerization reactor. It is further possible to recycle any additional amounts of the liquid bottom stream of the second distillation column, preferably after being evaporated in the heat exchanger, to any suitable position of the gas-phase polymerization reactor. In a preferred embodiment, the ratio of the part of the liquid bottom stream of the second distillation column, which is fed as degassing medium to the first degassing vessel, to the part of the liquid bottom stream of the second distillation column, which is recycled to the polymerization reactor, is in the range from 1:50 to 1:2 and preferably in the range from 1:20 to 1:5. Operating the distillation at a pressure in the range from 1 to 2.2 MPa, preferably from 1.5 to 2 MPa allows utilizing water as cooling medium for condensing the C₃-C₅ alkane and it is not needed to install an energy consuming refrigeration device for this purpose.

In step d) of the process of the present disclosure, the polyolefin particles are transferred from the separation vessel into a first degassing vessel. Preferably, the transfer is achieved by means of the pressure gradient prevailing between the separation vessel and the first degassing vessel. Preferably, the polyolefin particles are transferred continuously from the separation vessel to the first degassing vessel. The first degassing vessel is operated at a pressure from 0.1 to 0.4 MPa, preferably from 0.12 MPa to 0.35 MPa, and more preferably from 0.15 MPa to 0.3 MPa.

Within the first degassing vessel, the polyolefin particles are contacted in step e) with a gaseous stream comprising from 85 to 100 vol.-% of a C₃-C₅ alkane. Preferably, the gaseous stream comprises from 90 to 100 vol.-%, more preferably from 95 to 100 vol.-%, of the C₃-C₅ alkane. Preferably, the C₃-C₅ alkane is identical to the C₃-C₅ alkane which is used as polymerization diluent in the gas-phase polymerization reactor. It is especially preferred that the C₃-C₅ alkane is propane. Preferably, the gaseous stream comprising from 85 to 100 vol.-% of C₃-C₅ alkane is fed to the degassing vessel in an amount of from 10 kg to 200 kg per 1000 kg of polyolefin particles to be degassed. Preferably, the contacting of step e) is carried out at a temperature from 50°C to 120°C, more preferably from 60°C to 100°C and in particular from 70°C to 90°C. The residence time of the polyolefin particles in the first degassing vessel is preferably from 5 minutes to 5 hours, more preferably from 10 minutes to 4 hours and in particular from 15 minutes to 2 hours. The contacting is preferably carried out countercurrently. The polyolefin particles are then preferably introduced in the upper portion of the first degassing vessel and move downwards by gravity in contact with a countercurrent flow of a gaseous stream which is introduced at the bottom of the degassing vessel at one or more positions.

The gaseous stream for being contacted with the polyolefin particles in the first degassing vessel is continuously received from the reaction gas work-up unit. Most preferably, this gaseous stream is obtained in the reaction gas work-up unit by evaporating the liquid bottom stream of a second distillation column. By being contacted with the polyolefin particles, the gaseous stream may be enriched with unreacted monomer, comonomers, oligomers and other hydrocarbons.

In step f) of the process of the present disclosure, the gaseous stream, which had been in contact with the polyolefin particles in the first degassing vessel, is withdrawn from the first degassing vessel, compressed to the pressure of the gaseous stream withdrawn from the separation vessel, and transferred into the reaction gas work-up unit, in which the gaseous stream withdrawn from the separation vessel is worked up. In a preferred embodiment of the present disclosure, the compressed gaseous stream withdrawn from the first degassing vessel is combined with the gaseous stream withdrawn from the separation vessel and the combined stream is transferred into the reaction gas work-up unit.

In a preferred embodiment of the present disclosure, the polyolefin particles, which had been contacted with the gaseous stream comprising from 85 to 100 vol.-% of C₃-C₅ alkane in the first degassing vessel, are transferred in a step g) into a second degassing vessel and contacted therein, in a step h), at a pressure from 0.1 to 0.35 MPa with a stream comprising nitrogen and steam at conditions under which no condensation of water occurs. The transfer is preferably effected by means of gravity and a pressure gradient between the first and the second degassing vessel.

In the second degassing vessel, the contacting of the polyolefin particles and the stream comprising nitrogen and steam is preferably carried out countercurrently. In such a case, the polyolefin particles are preferably introduced at the top of the second degassing vessel and move downwards by gravity in contact with a countercurrent flow of the stream comprising nitrogen and steam which is introduced at the bottom of the degassing vessel at one or more positions.

The stream for degassing the polyolefin particles in the second degassing vessel comprises steam in an amount that no condensation of water occurs at the conditions within the second degassing vessel. The stream comprises preferably from 2 mol-% to 20 mol-%, more preferably from 5 mol-% to 15 mol-% of water vapor. The steam is preferably added in form of superheated or saturated steam and in particular in form of slightly superheated steam. In a preferred embodiment of the present disclosure, the nitrogen for forming the stream comprising nitrogen and steam is at least partly not fresh nitrogen but nitrogen coming from a third degassing step, in which it had previously been contacted with polyolefin particles having been transferred from the second to the third degassing vessel. Preferably the stream comprising nitrogen and steam is fed to the second degassing vessel in an amount of from 10 kg to 150 kg per 1000 kg of polyolefin particles to be degassed and in particular in an amount of from 20 kg to 80 kg per 1000 kg of polyolefin particles to be degassed.

A gas mixture enriched with unreacted comonomers, oligomers, other hydrocarbons and comprising reaction products of the reaction of the water vapor with the components of the polymerization catalyst system may be withdrawn from the second degassing vessel, preferably from its top, after contacting the stream comprising nitrogen and steam with the polyolefin particles. In a preferred embodiment of the present disclosure, this gas mixture is taken off the polymerization system as off-gas and, after having passed a simple neutralization unit, disposed, for example via a catalytic oxidation unit.

It is possible to carry out this embodiment of the present disclosure using only a relatively small amount of steam in the second degassing vessel since the water vapor has mainly the function of deactivating the catalyst components, in particular the organoaluminum compounds of the polymerization catalyst system.

Preferably step h) of the process of the present disclosure is carried out at a pressure from 0.1 MPa to 0.35 MPa, more preferably 0.11 MPa to 0.25 MPa and a temperature from 50°C to 120°C, more preferably from 60°C to 100°C and in particular of from 70°C to 90°C. The residence time of the polyolefin particles in the second degassing vessel is preferably from 5 minutes to 2 hours and more preferably from 10 minutes to 1 hour.

Preferably, the polyolefin particles are transferred, in a step i), to a third degassing vessel after having been contacted with the stream comprising nitrogen and steam in the second degassing vessel. In the third degassing vessel, the polyolefin particles are contacted, as a step j), with a stream of nitrogen. The transfer of the polyolefin particles from the second degassing vessel to the third degassing vessel is preferably effected by means of a stream of nitrogen which had previously been used for contacting the polyolefin particles in step j), i.e. which had been withdrawn from the third degassing vessel and is reused as conveying medium for the particle transfer from the second to the third degassing vessel. It is further possible to carry out the contacting of step j) in a parallel arrangement in two or more third degassing vessels at one or more positions.

In the third degassing vessel, the contacting of the polyolefin particles and the stream of nitrogen is preferably carried out countercurrently. In such a case, the polyolefin particles are preferably introduced at the top of the third degassing vessel and move downwards by gravity in contact with a countercurrent flow of a nitrogen stream introduced at the bottom of the degassing vessel.

Subsequent to contacting the nitrogen stream with the polyolefin particles, a gas mixture enriched in unreacted comonomers, oligomers and other hydrocarbons is withdrawn from the third degassing vessel, preferably from the top. This gas mixture is then preferably cooled in a heat exchanger, compressed and then reused for both forming a part of the gaseous stream for degassing in the second degassing vessel and, after being cooled in a further heat exchanger, for transporting the polyolefin particles from the second degassing vessel to the third degassing vessel.

Preferably, step j) of the process of the present disclosure is carried out at a pressure from 0.1 MPa to 0.2 MPa, more preferably 0.1 MPa to 0.15 MPa and a temperature from 50°C to 120°C, more preferably from 60°C to 100°C and in particular from 70°C to 90°C. The residence time of the polyolefin particles in the third degassing vessel is preferably from 5 minutes to 10 hours, more preferably from 10 minutes to 6 hours and in particular from 20 minutes to 4 hours.

After having been having been contacted with the respective gas streams in the first degassing vessel or in the first and the second degassing vessel or in the first, the second and the third degassing vessel, the polyolefin particles are transferred to the further work-up such as for example for being provided with polymer additives and/or being pelletized in an extrusion step.

Figure 1 shows schematically a set-up for preparing an olefin polymer according to the process of the present disclosure.

Gas-phase polymerization reactor (1) is a fluidized-bed reactor comprising a fluidized bed (2) of polyolefin particles, a gas distribution grid (3) and a velocity reduction zone (4). The velocity reduction zone (4) is of increased diameter compared to the diameter of the fluidized-bed portion of the reactor. The polyolefin bed is kept in fluidized state by an upwardly flow of gas fed through the gas distribution grid (3) placed in a bottom portion of the reactor (1). The gaseous stream of the reaction gas leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of the recycle gas mixture in the heat exchanger so as to operate the reactor with condensed material, i.e. in the condensing mode. The recycle gas comprises, besides unreacted monomers, a C₃-C₅ alkane as polymerization diluent. Make-up monomers, molecular weight regulators, and process additives can be fed into the reactor (1) at various positions, for example via line (9) upstream of the compressor (6). Generally, the catalyst is fed into the reactor (1) via a line (10) that is preferably placed in the lower part of the fluidized bed (2).

The fluidized-bed reactor (1) further comprises a settling pipe (11), which is vertically arranged and integrated with its upper opening centrally into the gas distribution grid (3) is. The gas distribution grid (3) is endowed with a cone shape in such a way that the downward inclination towards the settling pipe (11) fosters the entry of the polyolefin particle into the settling pipe (11) due to gravity.

During operation of fluidized-bed reactor (1), the settling pipe (11) contains a bed of polyolefin particles which moves from top to bottom of the settling pipe. The polyolefin particles enter the settling pipe (11) through the upper opening and the polyolefin particles are withdrawn through discharge valve (12). The settling pipe (11) is further equipped, preferably at a position near the lower end of the settling pipe, with a line (13) for feeding a fluid such that an upward stream of the fluid in the bed of polyolefin particles within the settling pipe (11) can be induced. The introduced fluid is preferably the C₃-C₅ alkane utilized as polymerization diluent.

The polyolefin particles discharged from the settling pipe (11) through discharge valve (12) are transferred via line (14) into a separation vessel (15), in which the polyolefin particles are separated from a major part of the concomitantly discharged reaction gas. The separated gas is withdrawn from the top of separation vessel (15) and transferred through line (16) to a first separation column (17). A low-boiling fraction is withdrawn from the top of the first separation column (17) and transferred through line (18) to a second separation column (19). A high-boiling fraction is withdrawn from the bottom of the first separation column (17) and transferred by a pump (20) through line (21) to the recycle line (5).

The polyolefin particles separated from the major part of the concomitantly discharged reaction gas are transferred from the separation vessel (15) to a first degassing vessel (22), in which the polyolefin particles are contacted with a gaseous stream which comes from the second separation column (19). The liquid withdrawn from the bottom of the second separation column (19) through line (23) is pressurized by a pump (47) to a pressure higher than the pressure within the fluidized-bed reactor (1) and then evaporated in heat exchanger (24). The gaseous stream coming from the heat exchanger (24) is split and a part is fed via line (48) to degassing vessel (22) at the bottom at position (25). The other part of the evaporated liquid is fed to the settling pipe (11) via line (13).

Within degassing vessel (22), the gas flows upwards countercurrently to the flow of the polyolefin particles. The gas leaving the degassing vessel (22) via line (26) comprises beside gas, which had been fed at position (25), the remaining portion of the concomitantly discharged reaction gas, which was not separated off in the separation vessel (15), and gaseous components, which come out from the polyolefin particles. The gas stream leaving the degassing vessel (22) via line (26) is cooled in a heat exchanger (27) and transferred by compressor (28) to line (16) for being transferred to the first separation column (17).

The low-boiling fraction withdrawn from the top of the second separation column (19) is mainly returned to the polymerization by compressor (29) through line (30) to recycle line (5). A minor part of the low-boiling fraction withdrawn from the top of the second separation column (19) is branched off into line (31) and purged.

At the bottom of degassing vessel (22), polyolefin particles are withdrawn and transferred to a second degassing vessel (32) by means of gravity. The polyolefin particles are contacted with a stream of nitrogen and steam which is fed to the degassing vessel (32) at the bottom at position (33). Within degassing vessel (32), the stream of nitrogen and steam flows upwards countercurrently to the flow of the polyolefin particles. The conditions in the degassing vessel (32) are selected in a way that no condensation of water occurs.

The gas leaving degassing vessel (32) via line (34) exits the polymerization system as off-gas. The gas mixture for degassing the polyolefin particles in the second degassing step is composed of steam fed via line (35) and nitrogen, which can be added as fresh nitrogen via line (36) or as reused nitrogen coming from the subsequent third degassing step via line (37). Preferably at least the major part of the nitrogen fed to the degassing vessel (32) at position (33) is reused nitrogen coming via line (37).

At the bottom of degassing vessel (32), polyolefin particles are withdrawn and transferred to a third degassing vessel (38) by means of reused nitrogen coming via line (39). In the third degassing vessel (38), the polyolefin particles are countercurrently contacted with a stream of nitrogen, which is fed as fresh nitrogen via line (40) at position (41). The gas leaving the third degassing vessel (38) via line (42) is cooled in a heat exchanger (43), compressed by compressor (44) and fed to both line (37) for being further used as part of the gas stream in the second degassing vessel (32) and to heat exchanger (45) for being cooled and then used via line (39) for transporting polyolefin particles from degassing vessel (32) to degassing vessel (38).

At the bottom of degassing vessel (38), polyolefin particles are withdrawn and transferred via line (46) to the further work-up such as being provided with polymer additives and pelletized in an extrusion step.

The present disclosure provides a cost-effective process for degassing polyolefin particles, in which almost all monomers and comonomers concurrently discharged with the polyolefin particles can be recycled to the polymerization and the obtained polyolefin products have a good organoleptic and odor formation is avoided. By recycling a high proportion of the gas, which is discharged concomitantly with the polyolefin particles from the polymerization reactor, in liquid form back to the gas-phase polymerization reactor, it is possible to minimize the amount of gas which needs to be compressed from degassing pressure to polymerization pressure. Consequently, the process can be carried out with a relatively small compressor which reduces on the one hand the investment costs in the construction of the polymerization plant and on the other hand the operating costs during polymerization. Nonetheless, when carrying out the work-up of the C₃-C₅ alkane by distillation, it is still possible to conduct this distillation effectively by utilizing water as cooling medium instead of being forced to employ a refrigeration device for condensing the C₃-C₅ alkane.

## Claims

1. A process for preparing an olefin polymer, comprising the steps of
a) forming a particulate olefin polymer in a gas-phase polymerization reactor by homopolymerizing an olefin or copolymerizing an olefin and one or more other olefins at temperatures from 20 to 200°C and pressures of from 0.5 to 10 MPa in the presence of a polymerization catalyst and a reaction gas comprising a C₃-C₅ alkane as polymerization diluent;
b) discharging the formed polyolefin particles from the polymerization reactor into a separation vessel being operated at a pressure from 1 to 2.2 MPa;
c) withdrawing a gaseous stream from the separation vessel and transferring the gaseous stream into a reaction gas work-up unit, which is operated at a pressure from 0.001 to 0.2 MPa below the pressure of the separation vessel and which produces at least one liquid stream which is recycled to the polymerization reactor;
d) transferring the polyolefin particles from the separation vessel into a first degassing vessel operated at a pressure from 0.1 to 0.4 MPa; and
e) contacting therein the polyolefin particles with a gaseous stream comprising from 85 to 100 vol.-% of a C₃-C₅ alkane, wherein the gaseous stream is continuously received from the reaction gas work-up unit;
f) withdrawing the gaseous stream, which had been in contact with the polyolefin particles in the first degassing vessel, from the first degassing vessel, compressing the gaseous stream to the pressure of the gaseous stream withdrawn from the separation vessel, and transferring the compressed gaseous stream into the reaction gas work-up unit, in which the gaseous stream withdrawn from the separation vessel is worked up.

2. The process of claim 1, wherein the process further comprises the steps of
g) transferring the polyolefin particles from the first degassing vessel into a second degassing vessel; and
h) contacting therein the polyolefin particles at a pressure from 0.1 to 0.35 MPa with a stream comprising nitrogen and steam at conditions under which no condensation of water occurs.

3. The process of claim 2, wherein the process further comprises the steps of
i) transferring the polyolefin particles from the second degassing vessel into a third degassing vessel; and
j) contacting therein the polyolefin particles at a pressure from 0.1 to 0.2 MPa with a stream of nitrogen.

4. The process of any of claims 1 to 3, wherein, in step f), the compressed gaseous stream withdrawn from the first degassing vessel is combined with the gaseous stream withdrawn from the separation vessel and the combined stream is transferred into the reaction gas work-up unit.

5. The process of any of claims 1 to 4, wherein the reaction gas work-up unit operates by distillation.

6. The process of any of claims 1 to 5, wherein the reaction gas work-up unit comprises two separation stages.

7. The process of any of claims 1 to 6, wherein the contacting of the polyolefin particles in step e), and, if carried out, in step h) or in steps h) and j) is conducted countercurrently.

8. The process of any of claims 2 to 7, wherein, in step h), the polyolefin particles are contacted with a gaseous stream comprising from 2 mol-% to 20 mol-% of water vapor.

9. The process of any of claims 1 to 8, wherein, in step c), the gaseous stream withdrawn from the separation vessel is freed of entrained fine particles before being transferred into the reaction gas work-up unit.

10. The process of any of claims 1 to 9, wherein the gas-phase polymerization reactor is a stirred gas-phase reactor, a fluidized-bed reactor, or a multizone circulation reactor.

11. The process of any of claims 1 to 10, wherein, in step b), the formed polyolefin particles are discharged from a position of the gas-phase polymerization reactor, at which the polyolefin particles are present in a densified bed of polyolefin particles.

12. The process of claim 11, wherein the content of C₃-C₅ alkane in the gas surrounding the polyolefin particles in the densified bed of polyolefin particles is higher than the average content of C₃-C₅ alkane in the reaction gas within the gas-phase polymerization reactor.

13. The process of any of claims 1 to 12, wherein the polymerization is a homopolymerization of ethylene or a copolymerization of ethylene and one or more other olefins selected from the group consisting of 1-butene, 1-hexene and 1-octene.

14. The process of any of claims 1 to 13, wherein the C₃-C₅ alkane employed as polymerization diluent is identical to the C₃-C₅ alkane comprised in the gaseous stream employed for being contacted with the polyolefin particles in steps e).

15. The process of any of claims 1 to 14, wherein the C₃-C₅ alkane is propane, n-butane, isobutane, n-pentane or isopentane, or a mixture thereof.

## Patentansprüche

1. Verfahren zur Herstellung eines Olefinpolymers, umfassend die Schritte:
a) Bilden eines partikelförmigen Olefinpolymers in einem Gasphasenpolymerisationsreaktor durch Homopolymerisieren eines Olefins oder Copolymerisieren eines Olefins und eines oder mehrerer anderer Olefine bei Temperaturen von 20 bis 200 °C und Drücken von 0,5 bis 10 MPa in Gegenwart eines Polymerisationskatalysators und eines Reaktionsgases, das ein C₃-C₅-Alkan als Polymerisationsverdünnungsmittel umfasst;
b) Austragen der gebildeten Polyolefinpartikel aus dem Polymerisationsreaktor in ein Trenngefäß, das bei einem Druck von 1 bis 2,2 MPa betrieben wird;
c) Abziehen eines gasförmigen Stroms aus dem Trenngefäß, und Überführen des gasförmigen Stroms in eine Aufarbeitungseinheit für Reaktionsgas, die bei einem Druck von 0,001 bis 0,2 MPa unter dem Druck des Trenngefäßes betrieben wird und die mindestens einen Flüssigkeitsstrom produziert, der in den Polymerisationsreaktor zurückgeführt wird;
d) Überführen der Polyolefinpartikel aus dem Trenngefäß in ein erstes Entgasungsgefäß, das bei einem Druck von 0,1 bis 0,4 MPa betrieben wird; und
e) darin Kontaktieren der Polyolefinpartikel mit einem gasförmigen Strom, der 85 bis 100 Vol.% eines C₃-C₅-Alkans umfasst, wobei der gasförmige Strom kontinuierlich von der Aufarbeitungseinheit für Reaktionsgas zugeführt wird;
f) Abziehen des gasförmigen Stroms, der in dem ersten Entgasungsgefäß in Kontakt mit den Polyolefinpartikeln war, aus dem ersten Entgasungsgefäß, Komprimieren des gasförmigen Stroms auf den Druck des gasförmigen Stroms, der aus dem Trenngefäß abgezogen wurde, und Überführen des komprimierten gasförmigen Stroms in die Aufarbeitungseinheit für Reaktionsgas, in der der aus dem Trenngefäß abgezogene gasförmige Strom aufgearbeitet wird.

2. Verfahren nach Anspruch 1, wobei das Verfahren des Weiteren die Schritte umfasst:
g) Überführen der Polyolefinpartikel aus dem ersten Entgasungsgefäß in ein zweites Entgasungsgefäß; und
h) darin Kontaktieren der Polyolefinpartikel bei einem Druck von 0,1 bis 0,35 MPa mit einem Strom, der Stickstoff und Wasserdampf umfasst, unter Bedingungen, unter denen keine Kondensation von Wasser auftritt.

3. Verfahren nach Anspruch 2, wobei das Verfahren des Weiteren die Schritte umfasst:
i) Überführen der Polyolefinpartikel aus dem zweiten Entgasungsgefäß in ein drittes Entgasungsgefäß; und
j) darin Kontaktieren des Polyolefinpartikel bei einem Druck von 0,1 bis 0,2 MPa mit einem Stickstoffstrom.

4. Verfahren nach einem der Ansprüche 1 bis 3, wobei in Schritt f) der komprimierte gasförmige Strom, der aus dem ersten Entgasungsgefäß abgezogen wird, mit dem gasförmigen Strom kombiniert wird, der aus dem Trenngefäß abgezogen wird, und der kombinierte Strom in die Aufarbeitungseinheit für Reaktionsgas überführt wird.

5. Verfahren nach einem der Ansprüche 1 bis 4, wobei die Aufarbeitungseinheit für Reaktionsgas mittels Destillation arbeitet.

6. Verfahren nach einem der Ansprüche 1 bis 5, wobei die Aufarbeitungseinheit für Reaktionsgas zwei Trennstufen umfasst.

7. Verfahren nach einem der Ansprüche 1 bis 6, wobei das Kontaktieren der Polyolefinpartikel in Schritt e) und, falls durchgeführt, in Schritt h) oder in den Schritten h) und j) im Gegenstrom durchgeführt wird.

8. Verfahren nach einem der Ansprüche 2 bis 7, wobei die Polyolefinpartikel in Schritt h) mit einem gasförmigen Strom kontaktiert werden, der 2 Mol.% bis 20 Mol.% Wasserdampf umfasst.

9. Verfahren nach einem der Ansprüche 1 bis 8, wobei in Schritt c) der gasförmige Strom, der aus dem Trenngefäß abgezogen wird, von mitgerissenen Feinpartikeln befreit wird, bevor er in die Aufarbeitungseinheit für Reaktionsgas überführt wird.

10. Verfahren nach einem der Ansprüche 1 bis 9, wobei der Gasphasenpolymerisationsreaktor ein gerührter Gasphasenreaktor, ein Wirbelbettreaktor oder ein Mehrzonen-Zirkulationsreaktor ist.

11. Verfahren nach einem der Ansprüche 1 bis 10, wobei in Schritt b) die gebildeten Polyolefinpartikel aus einer Stelle des Gasphasenpolymerisationsreaktors entladen werden, an der die Polyolefinpartikel in einem verdichteten Bett aus Polyolefinpartikeln vorliegen.

12. Verfahren nach Anspruch 11, wobei der Gehalt an C₃-C₅-Alkan in dem Gas, welches die Polyolefinpartikel in dem verdichteten Bett der Polyolefinpartikel umgibt, höher als der durchschnittliche Gehalt an C₃-C₅-Alkan in dem Reaktionsgas innerhalb des Gasphasenpolymerisationsreaktors ist.

13. Verfahren nach einem der Ansprüche 1 bis 12, wobei die Polymerisation eine Homopolymerisation von Ethylen oder eine Copolymerisation von Ethylen und einem oder mehreren anderen Olefinen ausgewählt aus der Gruppe bestehend aus 1-Buten, 1-Hexen und 1-Octen ist.

14. Verfahren nach einem der Ansprüche 1 bis 13, wobei das als Polymerisationsverdünnungsmittel verwendete C₃-C₅-Alkan mit dem C₃-C₅-Alkan identisch ist, das in dem gasförmigen Strom enthalten ist, der zum Kontakt mit den Polyolefinpartikeln in den Schritten e) verwendet wird.

15. Verfahren nach einem der Ansprüche 1 bis 14, wobei das C₃-C₅-Alkan Propan, n-Butan, Isobutan, n-Pentan oder Isopentan oder eine Mischung davon ist.

## Revendications

1. Procédé de préparation d'un polymère oléfinique, comprenant les étapes de
a) formation d'un polymère oléfinique particulaire dans un réacteur de polymérisation à phase gazeuse par homopolymérisation d'une oléfine ou copolymérisation d'une oléfine et d'une ou de plusieurs autres oléfines à des températures de 20 à 200°C et à des pressions de 0,5 à 10 MPa en présence d'un catalyseur de polymérisation et d'un gaz de réaction comprenant un alcane en C₃-C₅ en tant que diluant de polymérisation ;
b) évacuation les particules de polyoléfine formées du réacteur de polymérisation dans un récipient de séparation fonctionnant à une pression de 1 à 2,2 MPa ;
c) soutirage d'un flux gazeux à partir du récipient de séparation et transfert du flux gazeux dans une unité de traitement de gaz de réaction, qui fonctionne à une pression de 0,001 à 0,2 MPa au-dessous de la pression du récipient de séparation et qui produit au moins un flux liquide qui est recyclé dans le réacteur de polymérisation ;
d) transfert des particules de polyoléfine depuis le récipient de séparation dans un premier récipient de dégazage fonctionnant à une pression de 0,1 à 0,4 MPa ; et
e) mise en contact dans celui-ci des particules de polyoléfine avec un flux gazeux comprenant 85 à 100% en volume d'un alcane en C₃-C₅, le flux gazeux étant reçu en continu à partir de l'unité de traitement de gaz de réaction ;
f) soutirage du flux gazeux, qui a été en contact avec les particules de polyoléfine dans le premier récipient de dégazage, à partir du premier récipient de dégazage, compression du flux gazeux jusqu'à la pression du flux gazeux soutiré à partir du récipient de séparation et transfert du flux gazeux comprimé dans l'unité de traitement de gaz de réaction, dans laquelle le flux gazeux soutiré à partir du récipient de séparation est traité.

2. Procédé selon la revendication 1, le procédé comprenant en outre les étapes de
g) transfert des particules de polyoléfine depuis le premier récipient de dégazage dans un deuxième récipient de dégazage ; et
h) mise en contact dans celui-ci des particules de polyoléfine à une pression de 0,1 à 0,35 MPa avec un flux comprenant de l'azote et de la vapeur dans des conditions dans lesquelles aucune condensation d'eau ne se produit.

3. Procédé selon la revendication 2, le procédé comprenant en outre les étapes de
i) transfert des particules de polyoléfine depuis le deuxième récipient de dégazage dans un troisième récipient de dégazage ; et
j) mise en contact dans celui-ci des particules de polyoléfine à une pression de 0,1 à 0,2 MPa avec un flux d'azote.

4. Procédé selon l'une quelconque des revendications 1 à 3, où, à l'étape f), le flux gazeux comprimé soutiré à partir du premier récipient de dégazage est combiné au flux gazeux soutiré à partir du récipient de séparation et le flux combiné est transféré dans l'unité de traitement de gaz de réaction.

5. Procédé selon l'une quelconque des revendications 1 à 4, l'unité de traitement de gaz de réaction fonctionnant par distillation.

6. Procédé selon l'une quelconque des revendications 1 à 5, l'unité de traitement de gaz de réaction comprenant deux étages de séparation.

7. Procédé selon l'une quelconque des revendications 1 à 6, la mise en contact des particules de polyoléfine à l'étape e), et, si elle est réalisée, à l'étape h) ou aux étapes h) et j), étant effectuée à contre-courant.

8. Procédé selon l'une quelconque des revendications 2 à 7, où, à l'étape h), les particules de polyoléfine sont mises en contact avec un flux gazeux comprenant 2% en mole à 20% en mole de vapeur d'eau.

9. Procédé selon l'une quelconque des revendications 1 à 8, où, à l'étape c), le flux gazeux soutiré à partir du récipient de séparation est débarrassé des particules fines entraînées avant d'être transféré dans l'unité de traitement de gaz de réaction.

10. Procédé selon l'une quelconque des revendications 1 à 9, le réacteur de polymérisation à phase gazeuse étant un réacteur agité à phase gazeuse, un réacteur à lit fluidisé ou un réacteur à circulation multizone.

11. Procédé selon l'une quelconque des revendications 1 à 10, où, à l'étape b), les particules de polyoléfine formées sont évacuées à partir d'une position du réacteur de polymérisation à phase gazeuse au niveau de laquelle les particules de polyoléfine sont présentes dans un lit densifié de particules de polyoléfine.

12. Procédé selon la revendication 11, la teneur en alcane en C₃-C₅ dans le gaz entourant les particules de polyoléfine dans le lit densifié de particules de polyoléfine étant supérieure à la teneur moyenne en alcane en C₃-C₅ dans le gaz de réaction à l'intérieur du réacteur de polymérisation à phase gazeuse.

13. Procédé selon l'une quelconque des revendications 1 à 12, la polymérisation étant une homopolymérisation d'éthylène ou une copolymérisation d'éthylène et d'une ou de plusieurs autres oléfines choisies dans le groupe constitué de 1-butène, de 1-hexène et de 1-octène.

14. Procédé selon l'une quelconque des revendications 1 à 13, l'alcane en C₃-C₅ utilisé en tant que diluant de polymérisation étant identique à l'alcane en C₃-C₅ contenu dans le flux gazeux utilisé pour être mis en contact avec les particules de polyoléfine à l'étape e).

15. Procédé selon l'une quelconque des revendications 1 à 14, l'alcane en C₃-C₅ étant le propane, le n-butane, l'isobutane, le n-pentane ou l'isopentane ou un mélange de ceux-ci.
